# EUROPÄISCHE PATENTANMELDUNG

(11) **EP 0 771 811 A1**
(43) Veröffentlichungstag der Anmeldung: **07.05.1997**
(21) Anmeldenummer: 96117121.2
(22) Anmeldetag: 25.10.1996
(51) Int. Cl.: C07F 9/46

(54) **Verfahren zur Herstellung von sekundären Arylphosphanoxiden**

(30) Priorität: 06.11.1995 DE 19541276
(71) Anmelder: HOECHST AKTIENGESELLSCHAFT, 65929 Frankfurt am Main (DE)
(72) Erfinder: Kleiner, Hans-Jerg, Dr., 61476 Kronberg (DE)

(57) **Zusammenfassung**

Die Erfindung betrifft ein Verfahren zur Herstellung sekundärer Arylphosphanoxide der allgemeinen Formel (I) 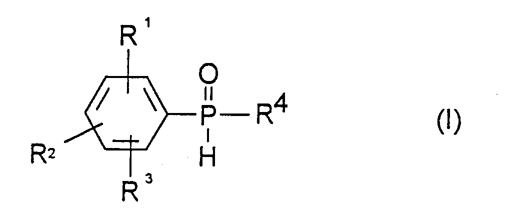 worin R¹ bis R³ unabhängig voneinander Wasserstoff, Halogen, Trifluormethyl, (C₁-C₆)Alkyl, (C₁-C₆)Alkoxy, Di(C₁-C₆)Alkylamino, Diphenylamino bedeuten und R⁴ (C₁-C₁₂)Alkyl, Cycloalkyl oder Aralkyl oder die Gruppierung 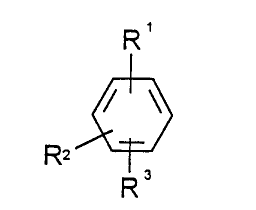 bedeuten, dadurch gekennzeichnet, daß man Arylphosphinigsäurealkylester der allgemeinen Formel (II) 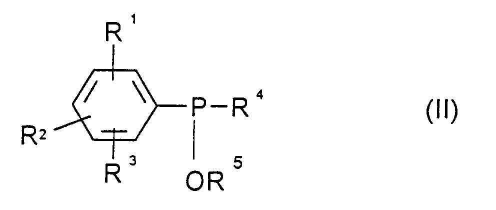 worin R¹, R², R³ und R⁴ die oben angegebene Bedeutung haben und R⁵ (C₁-C₄)Alkyl bedeutet, mit Wasser im Molverhältnis Phosphinigsäureester zu Wasser von 1:1 bis 1:1,5 bei erhöhter Temperatur umsetzt.

## Beschreibung

Die Erfindung betrifft ein Verfahren zur Herstellung sekundärer Arylphosphanoxide.

Sekundäre Arylphosphanoxide sind wertvolle Ausgangsstoffe zur Herstellung von Flammschutzmitteln, Metallextraktionsmitteln und tert.-Phosphanen als Liganden. Insbesondere Diphenylphosphanoxid ist von Bedeutung (siehe z.B. US-PS-5312890; M. I. Kabachnik et al., Zh. Obshch. Khim. 55, 2481 (1985)). Am einfachsten erscheint ihre Herstellung durch Hydrolyse der Arylphosphinigsäurehalogenide (Houben-Weyl, Methoden der organischen Chemie, Band XII/1, 193, 1963). Diese gelingt in guten Ausbeuten in organischen Verdünnungsmitteln, um die häufig zu beobachtende Disproportionierung zu vermeiden. Als Verdünnungsmittel wurde in diesem Fall das cancerogene Tetrachlormethan eingesetzt. Nachteilig bei diesem Verfahren im Falle einer technischen Durchführung ist insbesondere die Entfernung des Halogenwasserstoffs. Dazu sind aufwendige Extraktionsverfahren erforderlich. Es ist deshalb bereits die Hydrolyse der Arylphosphinigsäureester mit Wasser in Gegenwart organischer Verdünnungsmittel und mit Hilfe katalytischer Mengen anorganischer Säuren vorgeschlagen worden (M. I. Kabachnik et al., JZV. Akad. Nauk SSSR, Otdel. Khim. Nauk 9, 1584 (1962)). Auch in diesem Fall ist die Gewinnung reiner Arylphosphanoxide technisch schwierig, da die anorganischen Säuren bei der Aufarbeitung stören.

Es bestand daher ein Bedarf, ein Verfahren zu entwickeln, das die vorstehend genannten Nachteile vermeidet, sich technisch ohne großen Aufwand realisieren läßt und darüber hinaus die gewünschten Produkte sowohl in hoher Ausbeute als auch in hoher Reinheit zugänglichmacht.

Diese Aufgabe wird gelöst durch ein Verfahren zur Herstellung sekundärer Arylphosphanoxide der allgemeinen Formel (I) 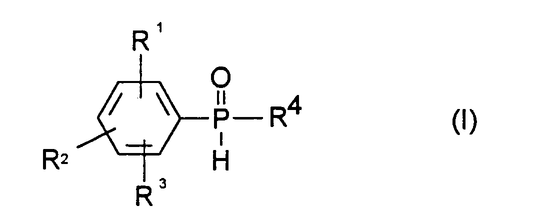 worin R¹ bis R³ unabhängig voneinander Wasserstoff, Halogen, Trifluormethyl, (C₁-C₆)Alkyl, (C₁-C₆)Alkoxy, Di(C₁-C₆)Alkylamino, Diphenylamino bedeuten und R⁴ (C₁-C₁₂)Alkyl, Cycloalkyl oder Aralkyl oder die Gruppierung 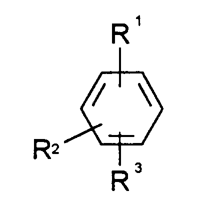 bedeuten, dadurch gekennzeichnet, daß man Arylphosphinigsäurealkylester der allgemeinen Formel (II) 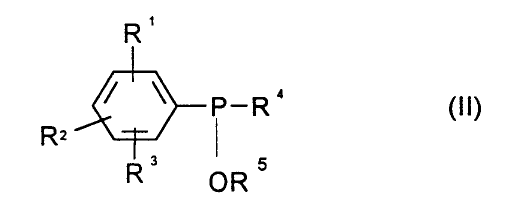 worin R¹, R², R³ und R⁴ die oben angegebene Bedeutung haben und R⁵ (C₁-C₄)Alkyl bedeutet, mit Wasser, im Molverhältnis Phosphinigsäureester zu Wasser von 1:1 bis 1:1,5, bei erhöhter Temperatur umsetzt.

Beispiele für Alkyl bzw. Alkoxy in den Resten R¹ bis R³ in den Verbindungen (I)/(II) sind Methyl, Ethyl, Propyl, Isopropyl und die verschiedenen Butylreste bzw. Methoxy und Ethoxy. Beispiel für Dialkylamino ist insbesondere Dimethylamino.

Wichtige Verbindungen, die nach dem erfindungsgemäßen Verfahren herzustellen sind, sind z. B. Diphenylphosphanoxid, Cyclohexyl-phenylphosphanoxid, Isopropyl-phenylphosphanoxid, n-Hexyl-phenylphosphanoxid, Bis(4-Fluorphenyl)-phosphanoxid, 4-Methoxyphenyl-phenylphosphanoxid, 4-Methoxyphenyl-3-fluorphenylphosphanoxid, 4-Diphenylaminophenyl-phenylphosphanoxid und Bis(4-dimethylaminophenyl)-phosphanoxid.

Von besonderer Bedeutung ist das Verfahren für die Herstellung von Verbindungen, worin 2, insbesondere 3 der Reste R¹ bis R³ Wasserstoff bedeuten, insbesondere zur Herstellung von Diphenylphosphanoxid.

Es ist als überraschend zu bezeichnen, daß unter den erfindungsgemäßen Bedingungen (Abwesenheit organischer Verdünnungsmittel, erhöhte Temperatur) die bekannte Disproportionierung sekundärer Phosphanoxide unterbleibt (siehe dazu J. B. Levy et al., Phosphorus, Sulfur and Silicon, 1993, 75, 75).

Als Ausgangsstoffe der allgemeinen Formel (II) sind insbesondere zu nennen:
Diphenylphosphinigsäuremethylester, Diphenylphosphinigsäureethylester, Cyclohexyl-phenylphosphinigsäureethylester, Isopropyl-phenylphosphinigsäureethylester, n-Hexyl-phenylphosphinigsäureethylester, Bis(4-fluorphenyl)phosphinigsäureethylester, 4-Methoxyphenyl-phenylphosphinigsäure-n-propylester, 4-Methoxyphenyl-3-fluorphenylphosphinigsäureethylester, 4-Diphenylaminophenyl-phenylphosphinigsäureethylester und Bis(4-Dimethylaminophenyl)-phosphinigsäureethylester.

Die Ausgangsstoffe der allgemeinen Formel (II) werden nach bekannten Methoden hergestellt, im allgemeinen aus den entsprechenden Chlorphosphanen durch Umsetzung mit den entsprechenden Alkoholen. Es ist bevorzugt, die Herstellung gemäß den Verfahren der Patent-Anmeldungen DE Aktenzeichen 19502913.5 und DE Aktenzeichen 19502911.9 durchzuführen, da nach diesen Verfahren besonders reine Produkte hergestellt werden können.

Es hat sich in vielen Fällen bewährt, die Ausgangsverbindungen der allgemeinen Formel (II) auf 50 bis 130°C, bevorzugt 70 bis 110°C zu erhitzen und unter beständigem Rühren Wasser einzudosieren. Das Molverhältnis Phosphinigsäureester/Wasser soll dabei 1:1 bis 1:1,5, insbesondere 1:1,05 zu 1:1,2, betragen. Die Zudosierung des Wassers erfolgt zweckmäßig zu Beginn so langsam, daß die Homogenität des Reaktionsgemisches erhalten bleibt und keine Zweiphasenbildung einsetzt. Im Zuge der fortschreitenden Reaktion kann dann die Zudosierung des Wassers schneller erfolgen. Nach beendeter Wasserzugabe wird zweckmäßig einige Stunden bei Reaktionstemperatur gerührt. Nach beendeter Umsetzung wird der gebildete Alkohol gegebenenfalls mit überschüssigem Wasser im Vakuum destillativ entfernt. Die anfallenden Destillationsrückstände stellen die gewünschten Arylphosphanoxide in hoher Reinheit dar. Gegebenenfalls kann durch Umkristallisation oder Vakuumdestillation eine weitere Hochreinigung erfolgen.

Die nachfolgenden Beispiele dienen zur Erläuterung der Erfindung.

### Beispiel 1:

1060 g (4,609 Mol) Diphenylphosphinigsäureethylester werden unter Stickstoffatmosphäre auf 90°C erhitzt und unter ständigem Rühren während 3 Stunden bei dieser Temperatur 88 g Wasser (4,89 Mol) eingetropft. Dann wird 3 Stunden bei 85 bis 90°C nachgerührt. Nach beendeter Umsetzung werden 215 g eines Ethanol/Wasser-Gemisches im Vakuum abdestilliert bis zu einer Innentemperatur von 60°C. Der verbleibende Rückstand wird in eine Schale gegossen und im Exsikkator über Phosphorpentoxid getrocknet. Die Schmelze erstarrt kristallin. Man erhält 921 g mit einem Schmelzpunkt von 53 bis 55°C. Das entspricht einer Ausbeute von 99 % d. Th..
Zur Feinreinigung ist eine Destillation möglich.
(Sdp.: 146°C bei 0,05 mbar)

### Beispiel 2:

36 g (0,153 Mol) Cyclohexyl-phenylphosphinigsäureethylester werden unter Stickstoffatmosphäre auf 90°C erhitzt und unter ständigem Rühren 2,9 g (0,161 Mol) Wasser in 3 Stunden eingetropft. Der Ansatz wird bei 85 bis 90°C 3 Stunden nachgerührt. Anschließend wird ein Ethanol/Wasser-Gemisch im Vakuum bis zu einer Innentemperatur von 95°C abdesilliert. Man erhält als Rückstand 30,5 g Cyclohexylphenylphosphanoxid. Das entspricht einer Ausbeute von 96 % d. Th..

### Beispiel 3:

32 g (0,135 Mol) n-Hexyl-phenylphosphinigsäureethylester werden mit 2,55 g (0,142 Mol) Wasser in gleicher Weise wie in Beispiel 2 beschrieben umgesetzt. Man erhält 25,5 g n-Hexyl-phenylphosphanoxid. Das entspricht einer Ausbeute von 90 % d. Th..
Eine Feinreinigung kann durch Destillation mit Hilfe eines Kurzwegverdampfers erfolgen (Badtemperatur 140°C bei 0,2 mbar).

## Patentansprüche

1. Verfahren zur Herstellung sekundärer Arylphosphanoxide der allgemeinen Formel (I) 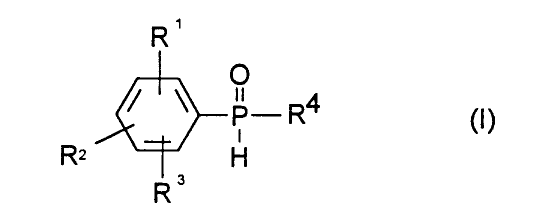 worin R¹ bis R³ unabhängig voneinander Wasserstoff, Halogen, Trifluormethyl, (C₁-C₆)Alkyl, (C₁-C₆)Alkoxy, Di(C₁-C₆)Alkylamino, Diphenylamino bedeuten und R⁴ (C₁-C₁₂)Alkyl, Cycloalkyl oder Aralkyl oder die Gruppierung 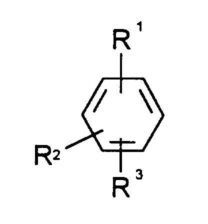 bedeuten, dadurch gekennzeichnet, daß man Arylphosphinigsäurealkylester der allgemeinen Formel (II) 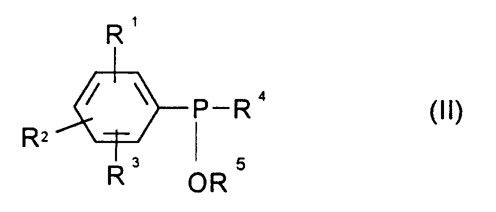 worin R¹, R², R³ und R⁴ die oben angegebene Bedeutung haben und R⁵ (C₁-C₄)Alkyl bedeutet, mit Wasser im Molverhältnis Phosphinigsäureester zu Wasser von 1:1 bis 1:1,5 bei erhöhter Temperatur umsetzt.

2. Verfahren nach Anspruch 1, dadurch gekennzeichnet, daß 2, insbesondere 3 der Reste R¹ bis R³ Wasserstoff bedeuten.

3. Verfahren nach Anspruch 1, dadurch gekennzeichnet, daß Formel (I) für Diphenylphosphanoxid, Cyclohexyl-phenylphosphanoxid, Isopropyl-phenylphosphanoxid, n-Hexyl-phenylphosphanoxid, Bis(4-Fluorphenyl)-phosphanoxid, 4-Methoxyphenyl-phenylphosphanoxid, 4-Methoxyphenyl-3-fluorphenylphosphanoxid, 4-Diphenylaminophenyl-phenylphosphanoxid und Bis(4-Dimethylaminophenyl)-phosphanoxid, insbesondere Diphenylphosphanoxid steht.

4. Verfahren nach mindestens einem der Ansprüche 1 bis 3, dadurch gekennzeichnet, daß die Edukte der Formel (II) auf 50 bis 130°C, insbesondere 70 bis 110°C erhitzt werden und unter Rühren Wasser eindosiert wird.

5. Verfahren nach mindestens einem der Ansprüche 1 bis 4, dadurch gekennzeichnet, daß das Molverhältnis Phosphinigsäureester zu Wasser 1:1,05 bis 1:1,2 beträgt.

6. Verfahren nach mindestens einem der Ansprüche 1 bis 5, dadurch gekennzeichnet, daß als Edukt der Formel (II)
Diphenylphosphinigsäuremethylester, Diphenylphosphinigsäureethylester, Cyclohexyl-phenylphosphinigsäureethylester, Isopropyl-phenylphosphinigsäureethylester, n-Hexyl-phenylphosphinigsäureethylester, Bis(4-fluorphenyl)phosphinigsäureethylester, 4-Methoxyphenyl-phenylphosphinigsäure-n-propylester, 4-Methoxyphenyl-3-fluorphenylphosphinigsäureethylester, 4-Diphenylaminophenyl-phenylphosphinigsäureethylester und Bis(4-dimethylaminophenyl)-phosphinigsäureethylester eingesetzt werden.
